(19) Europäisches Patentamt
European Patent Office
Office européen des brevets

(11) Publication number: **0 449 331 B1**

(12) # EUROPEAN PATENT SPECIFICATION

(45) Date of publication of patent specification: **12.07.95**

(51) Int. Cl.[6]: **C08G 18/10**, C08G 18/48, C08G 18/66, F16F 6/00

(21) Application number: **91105179.5**

(22) Date of filing: **02.04.91**

The file contains technical information submitted after the application was filed and not included in this specification

(54) **Low-foaming polyurethane elastomer.**

(30) Priority: **30.03.90 JP 81164/90**

(43) Date of publication of application:
**02.10.91 Bulletin 91/40**

(45) Publication of the grant of the patent:
**12.07.95 Bulletin 95/28**

(84) Designated Contracting States:
**DE FR**

(56) References cited:
**DE-A- 3 729 822**
**US-A- 4 237 173**
**US-A- 4 302 552**
**US-A- 4 647 596**
**US-A- 4 739 027**

(73) Proprietor: **RAILWAY TECHNICAL RESEARCH INSTITUTE**
**2-8-38, Hikari-cho**
**Kokubunji-shi**
**Tokyo (JP)**

Proprietor: **NISSHINBO INDUSTRIES, INC.**
**3-10, Nihonbashi**
**Yokoyama-cho**
**Chuo-ku**
**Tokyo 103 (JP)**

(72) Inventor: **Ohisi, Fujio**
**1-1-10, Midori-cho**
**Akishima-shi,**
**Tokyo (JP)**
Inventor: **Yokota, Atsushi**
**990-1, Niihori,**
**Hidaka-machi**
**Iruma-gun,**
**Saitama-ken (JP)**
Inventor: **Nagafuji, Takaharu**
**413-3-501, Inumakata**
**Urawa-shi,**
**Saitama-ken (JP)**
Inventor: **Ichikawa, Atsushi**
**1-19-50108, Hiro-machi 2-chome**
**Shinagawa-ku,**
**Tokyo (JP)**
Inventor: **Ishida, Makoto**
**4-2-302, Midori-cho 2-chome**
**Musashino-shi,**
**Tokyo (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

Inventor: **Ogawa, Yoshihiko**
**5-3-14-402, Nishiarai-honcho**
**Adachi-ku,**
**Tokyo (JP)**
Inventor: **Senga, Hideo**
**5-3-14-203, Nishiarai-honcho**
**Adachi-ku,**
**Tokyo (JP)**
Inventor: **Nakamura, Satoshi**
**5-3-16-102, Nishiarai-honcho**
**Adachi-ku,**
**Tokyo (JP)**

(74) Representative: **Kraus, Walter, Dr. et al**
**Patentanwälte Kraus, Weisert & Partner**
**Thomas-Wimmer-Ring 15**
**D-80539 München (DE)**

## Description

The present invention relates to a low-foaming polyurethane elastomer. More particularly, the present invention relates to a low-foaming polyurethane elastomer suitable for use as a vibration-damping material, particularly a vibration-damping pad for railroad track.

As the vibration-damping pad used in railroad tracks in order to reduce the vibration occurring during vehicle running, there can be mentioned, for example, flat low spring pads which are used beneath tracks, pads for bridge tie which are used beneath bridge ties, and vibration-damping materials for track slab which are used beneath track slabs.

As the vibration-damping pad for railroad, non-foaming rubber copolymers of styrene-butadiene type have been used in large amounts. The spring constant of this conventional vibration-damping pad is adjusted by forming grooves in the pad or by changing the width of the pad. However, the adjustment of spring constant by these methods has a limitation, making it difficult to obtain a pad of low spring. Moreover, since the above conventional pad is a non-foaming type, the pad undergoes a traverse strain when subjected to a stress and may cause slip-off owing to the repeated passing of train.

A method for reducing the spring constant of vibration-damping pad is proposed in Japanese Laid-Open Patent Publication No. 151701/1988. This method, however, has problems, for example, in that the resulting pad has a complex shape.

Meanwhile, a plurality of polyurethane elastomers are proposed as a vibration-damping material. However, none of them is fully satisfactory as a vibration-damping material for railroad which can withstand severe conditions during the running of train. For example, foamed polyurethane elastomers proposed in Japanese Laid-Open Patent Publication Nos. 27913/1984, 158712/1987 and 181815/1986 have a low tensile strength; a foamed polyurethane elastomer described in Japanese Laid-Open Patent Publication No. 250019/1986 has a poor compression set; and a polyurethane elastomer composition described in Japanese Patent Publication No. 45149/1987 has a poor compression set and is a non-foaming type, making it difficult to obtain different spring constants.

US-A-4 302 552 relates to a vibration isolator consisting essentially of a microcellular polyurethane elastomer having a bulk density of 0.3 to 0.9 g/cm$^3$, said polyurethane elastomer obtained by reacting in the presence of water as the blowing agent (a) an organic polyisocyanate, (b) a polyether polyol having an average number of functional groups of 2.5 to 3.5 and a number average molecular weight of 4500 to 8500, and (c) a chain extender, in such a ratio that the NCO index is 90 to 110 and the concentration of the chain extender, based on the total weight of the three components (a), (b) and (c), is (0.4-2.0)x10$^{-3}$ equivalent/gram. Thus, this prior art document teaches that the number-average molecular weight of the polyether polyol must not be lower than 4500.

DE-OS 37 29 822 relates to a polyurethane rotational body which consists of partially linked polyetherurethane on the basis of polytetrahydrofuran and diphenylmethanediisocyanate and has a finely spread microporosity, wherein the volume of the pores amounts to 15% of the total volume and the largest diameters of the pores is smaller than 0.5% of the outer diameter of the rotational body.

US-A-4 739 027 relates to a resilient polyurethane elastomeric article which is made from (A) a prepolymer prepared from a composition consisting essentially of diphenylmethane diisocyanate and polyoxytetramethylene glycol, and (B) a dual component chain extender consisting essentially of a low molecular weight triol and a material selected from one of 1,4-butanediol and resorcinol di(beta-hydroxy ethyl) ether. The admixture can be used to impregnate or coat porous fabric material which upon cure can be used as relatively soft, flexible seals or shock isolator pads.

The main object of the present invention is to provide a low-foaming polyurethane elastomer free of the above drawbacks and suitable for use as a vibration-damping material particularly for railroad track.

According to the present invention there is provided a low-foaming polyurethane elastomer which is formed from

(A) a prepolymer obtained by the reaction between polytetramethylene ether glycol and diphenylmethane diisocyanate, having a NCO content of 3-22 % by weight,

(B) a polyoxypropylenetriol having a structure represented by

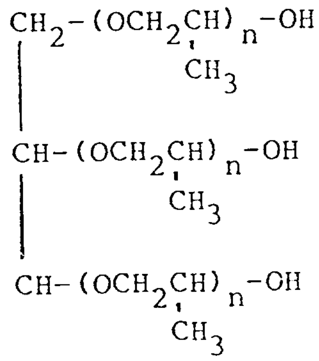

and having a number-average molecular weight of 600-3,000 and a short-chain diol having a molecular weight of 120 or less, and

(C) a foaming agent selected from water and halogenated hydrocarbons,

and which has an urea bond concentration of 5 x $10^{-4}$ mole/g or less and a bulk density of 0.4-1 g/$cm^3$.

The low-foaming polyurethane elastomer of the present invention is hereinafter described in more detail.

(A) Isocyanate component

In the present invention, as the isocyanate component for production of a polyurethane elastomer, there is used a prepolymer obtained by the reaction between polytetramethylene ether glycol (hereinafter referred to as PTMEG in some cases) and diphenylmethane diisocyanate (hereinafter referred to as MDI in some cases).

PTMEG used in production of said prepolymer is represented by the formula $HO-[CH_2CH_2CH_2CH_2O]n-H$ and desirably has a number-average molecular weight of generally 500-4,000, preferably 1,000-2,000. MDI to be reacted with PTMEG may be a crude product or a purified product but is desirably a purified product.

The reaction between PTMEG and MDI is advantageously conducted in such mixing ratio of the two materials as to give a prepolymer having a NCO content of 3-22 % by weight, preferably 5-15 % by weight, more preferably 10-15 % by weight. When the NCO content in the prepolymer is lower than 3 % by weight, the prepolymer has a high viscosity and the mixing ratio of the isocyanate component to the polyol component is high. When the NCO content in the prepolymer is higher than 22 % by weight, the polyurethane elastomer produced has a low strength and tends to show a poor compression set.

Formation of a prepolymer from PTMEG and MDI can be effected easily by a per se known method.

(B) Polyol component

In production of a polyurethane elastomer of the present invention, there are used a polyoxypropylenetriol and a short-chain diol in combination as the polyol component. As the polyoxypropylenetriol, there is used a polyoxypropylenetriol having a structure represented by

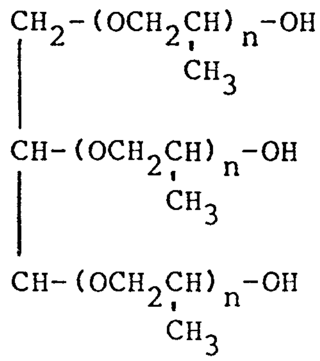

and having a number-average molecular weight of 600-3,000, more preferably 1,000-3,000. As the short-chain diol, there is used a diol having a molecular weight of 120 or less, such as ethylene glycol, propylene glycol, butanediol . Ethylene glycol or 1,4-butanediol is particularly preferable. When the polyoxypropylenetriol has a number-average molecular weight smaller than 400, the resulting polyurethane elastomer tends to have a low elongation and a low tensile strength. When the molecular weight is larger than 5,000, the resulting polyurethane elastomer tends to have a poor compression set.

The proportions of the polyoxypropylenetriol and the short-chain diol are not strictly restricted and can be varied over a wide range depending upon the properties required for the polyurethane elastomer obtained; however, it is generally appropriate that the equivalent ratio of the polyoxypropylenetriol/the short-chain diol be 1/30 to 2/1, preferably 1/20 to 1/2, more preferably 1/10 to 1/2.

(C) Foaming agent

As the foaming agent, there is used water or a halogenated hydrocarbon such as Freon 11, Freon 113, methylene chloride. The amount of the foaming agent can be selected so that the resulting polyurethane elastomer has a bulk density of 0.4-1 g/cm$^3$, preferably 0.5-0.9 g/cm$^3$, more preferably 0.6-0.8 g/cm$^3$.

When water is used as the foaming agent, it should be used in such an amount that the urea bond concentration in the polyurethane elastomer obtained becomes 5 x $10^{-4}$ mole/g or less, particularly 4 x $10^{-4}$ mole/g or less. When the urea bond concentration in the polyurethane elastomer is higher than 5 x $10^{-4}$ mole/g, the polyurethane elastomer tends to have a low strength.

(D) Other additives

The polyurethane elastomer of the present invention can have, as necessary, additives such as filler (e.g. metal powder like iron powder), inorganic fine powder (e.g. fine powder of calcium carbonate or aluminum hydroxide), coloring agent (e.g. carbon black), foam stabilizer (e.g. silicon), catalyst, ultraviolet absorber, light stabilizer, antioxidant in amounts ordinarily used.

(E) Production of low-foaming polyurethane elastomer

The isocyanate component (A), the polyol component (B), the foaming agent (C) and, as necessary, other additives are mixed so as to give a NCO index of ordinarily 90-100, preferably 100-105 [NCO index = (equivalent ratio of NCO/OH) x 100]; they are reacted at a mixture temperature of 25 °C to 70 °C; the reaction mixture is cured at a mold temperature of 40 °C to 120 °C for 10 minutes to 30 minutes; thereby, a low-foaming polyurethane elastomer of the present invention can be produced. The amount of the foaming agent can be varied depending upon the bulk density, etc. required for the polyurethane elastomer. The above mixing can be advantageously effected, for example, at 3,000-6,000 rpm using a low-pressure foaming machine provided with agitating elements.

The low-foaming polyurethane elastomer provided by the present invention can have a low spring constant without reducing the properties such as compression set, compression durability and can be used as a vibration-damping material, particularly a vibration-damping material for railroad such as flat low spring pad for railroad track, pad for railroad track, pad for bridge tie or vibration- damping material for track slab.

The low-foaming polyurethane elastomer provided by the present invention can have the following properties.

| | |
|---|---|
| Bulk density: | 0.4-1 $g/cm^3$, preferably 0.5-0.9 $g/cm^3$, more preferably 0.6-0.8 $g/cm^3$ |
| Tensile strength: | 40-100 $kg/cm^2$, preferably 70-100 $kg/cm^2$, more preferably 80-100 $kg/cm^2$ |
| Tear strength: | 20-60 kg/cm, preferably 30-60 kg/cm, more preferably 50-60 kg/cm |
| Compression set (50 % compression, 70 ° C, 22 hours): | 0-15 %, preferably 0-10 %, more preferably 0-5 % |
| Compression fatigue (50 x 50 x 10 mm, 0.9±0.6 ton, 10 Hz, 1,000,000 times): | 0-15 %, preferably 0-10 %, more preferably 0-5 % |
| Dynamic spring constant (100 x 100 x 10 mm, 1.2±0.9 ton, 10 Hz): | 10-40 t/cm, preferably 10-30 t/cm, more preferably 20-30 t/cm |

The low-foaming polyurethane elastomer of the present invention can satisfy a compression set of 15 % or less and a compression fatigue of 10 % or less both required for vibration-damping pads and yet can have a spring constant lower than those of conventional polyurethanes.

When the low-foaming polyurethane elastomer of the present invention is used in the above-mentioned applications, the flat low spring pad can be molded so as to have a plate shape of 140 x 180 x 10 mm; the pad for bridge tie can be molded so as to have a ⊐ shape having a thickness of 15-20 mm and a pressure area of 300-600 $cm^2$; and the vibration-damping material for track slab can be molded so as to have a sheet shape of 100 x 100 cm or larger.

The present invention is hereinafter described more specifically by way of Examples. In the Examples, parts refer to parts by weight.

Example 1

There were mixed at 25 ° C, 18 parts of a polyoxypropylenetriol having a molecular weight of 3,000 [GP 3,000 (code number) manufactured by SANYO CHEMICAL INDUSTRIES LIMITED], 10 parts of ethylene glycol (these two materials constitute the polyol component), 1.0 part of water, 0.5 part of triethylenediamine and 0.5 part of a foam stabilizer [CF 2080 (code number) manufactured by TORAY INDUSTRIES, INC.]. Meanwhile, as the isocyanate component, there was used a prepolymer having a NCO concentration of 20 %, obtained by reacting a polytetramethylene ether glycol having a molecular weight of 2,000 (hereinafter referred to as PTMG 2,000) and a crude MDI at 60 ° C for 20 hours.

The above mixture and the isocyanate component were mixed and reacted in such ratio that the resulting mixture has a NCO index of 105 [NCO index = (equivalent ratio of NCO/OH) x 100], at a liquid temperature of 40 ° C using a low-pressure foaming machine (rotation of agitating elements = 6,000 rpm). The reaction mixture was poured into a mold of 140 x 180 x 10 mm of 80 ° C, cured at 80 ° C for 30 minutes, and released from the mold. The obtained product was further cured at 80 ° C for 12 hours in a drier. The resulting product was measured for properties. The results are shown in Table 2.

As is clear from Table 2, the obtained polyurethane elastomer had a low spring constant and yet gave a good compression set and a good compression fatigue.

Examples 2-5

Polyurethane elastomers were produced in the same manner as in Example 1 except that the compounding recipes shown in Table 1 were used.

The properties of the polyurethane elastomers are shown in Table 2.

Table 1

| Example | 1 | 2 | 3 | 4 | 5 |
|---|---|---|---|---|---|
| GP 3,000[(1)] | 18 | | 42 | 35 | 33 |
| GP 600[(2)] | | 18 | | | |
| 1,6-Hexanediol | | 15 | | | |
| Ethylene glycol | 10 | | 12 | 13 | 2.5 |
| Water | 1.0 | 1.0 | 0.2 | | |
| Freon 113 | | | | 5 | 5 |
| Triethylenediamine | 0.5 | 0.5 | 0.7 | 1.0 | 1.0 |
| Foam stabilizer | 0.5 | 0.5 | 0.5 | 0.5 | 0.5 |
| PTMG 2,000/p-MDI prepolymer (NCO: 20%) | 100 | 100 | 100 | 100 | |
| PTMG 2,000/p-MDI prepolymer (NCO: 5%) | | | | | 100 |
| NCO index | 105 | 105 | 105 | 105 | 105 |

(1): Polyoxypropylenetriol (molecular weight: 3,000) (code number: GP 3,000, a product of SANYO CHEMICAL INDUSTRIES LIMITED)
(2): Polyoxypropylenetriol (molecular weight: 600) (code number: GP 600, a product of SANYO CHEMICAL INDUSTRIES LIMITED)

Table 2

| Item | Unit | Example | | | | |
|---|---|---|---|---|---|---|
| | | 1 | 2 | 3 | 4 | 5 |
| Bulk density | $g/cm^3$ | 0.5 | 0.5 | 0.9 | 0.6 | 0.6 |
| Urea bond concentration | mol/g | $4.3x10^{-4}$ | $4.1x10^{-4}$ | $7.2x10^{-5}$ | 0 | 0 |
| Tensile strength | $kg/cm^2$ | 72 | 65 | 95 | 81 | 68 |
| Tensile elongation | % | 280 | 195 | 330 | 390 | 320 |
| Tear strength | kg/cm | 37 | 30 | 51 | 38 | 41 |
| Compression set (1) | % | 7.8 | 4.0 | 6.2 | 8.6 | 12.3 |
| Compression fatigue (2) | % | 3.8 | 5.1 | 6.4 | 7.8 | 9.4 |
| Dynamic spring constant (3) | t/cm | 10.8 | 21.4 | 28.3 | 8.4 | 6.7 |

(1): Compression set was measured under conditions of a 50 % compression, 70°C and 22 hours.

(2): Compression fatigue was measured under conditions of 50 x 50 x 10 mm, 0.9±0.6 ton, 10 Hz and 1,000,000 times.

(3): Dynamic spring constant was measured under conditions of 100 x 100 x 10 mm, 1.2±0.9 ton and 10 Hz.

Comparative Examples 1-4

Polyurethanes were produced in the same manner as in Example 1 except that the compounding recipes shown in Table 3 were used.

The properties of the polyurethanes are shown in Table 4.

Table 3

| Comparative Example | 1 | 2 | 3 | 4 |
|---|---|---|---|---|
| GP 3,000 | | 29 | 20 | 18 |
| GP 600 | 68 | | | |
| Ethylene glycol | | 8 | 13.5 | 10 |
| Water | 1.0 | 1.5 | 1.0 | 1.0 |
| Triethylenediamine | 0.5 | 0.3 | 0.5 | 0.5 |
| Foam stabilizer | 0.5 | 0.5 | 0.5 | 0.5 |
| PTMG 2,000/p-MDI prepolymer (NCO: 20%) | 100 | 100 | | |
| PTMG 2,000/p-MDI prepolymer (NCO: 25%) | | | 100 | |
| pp 2,000*/p-MDI prepolymer (NCO: 20%) | | | | 100 |
| NCO index | 105 | 105 | 105 | 105 |

*: Polyoxypropylene glycol (molecular weight: 2,000) (trade name: pp 2,000, a product of SANYO CHEMICAL INDUSTRIES LIMITED)

Table 4

| Item | Unit | Comparative Example 1 | Comparative Example 2 | Comparative Example 3 | Comparative Example 4 |
|---|---|---|---|---|---|
| Bulk density | $g/cm^3$ | 0.5 | 0.4 | 0.5 | 0.5 |
| Urea bond concentration | mol/g | $3.3 \times 10^{-4}$ | $6.0 \times 10^{-4}$ | $4.1 \times 10^{-4}$ | $4.3 \times 10^{-4}$ |
| Tensile strength | $kg/cm^2$ | 32 | 37 | 21 | 18 |
| Tensile elongation | % | 140 | 160 | 145 | 210 |
| Tear strength | kg/cm | 18 | 21 | 19 | 7 |
| Compression set | % | 14.1 | 15.8 | 28.6 | 38.1 |
| Compression fatigue | % | Fractured | Fractured | 25.4 | Fractured |
| Dynamic spring constant | t/cm | 18.6 | 20.5 | 15.2 | 10.3 |

## Claims

**1.** A low-foaming polyurethane elastomer which is formed from

(A) a prepolymer obtained by the reaction between polytetramethylene ether glycol and diphenylmethane diisocyanate, having a NCO content of 3-22 % by weight,

(B) a polyoxypropylenetriol having a structure represented by

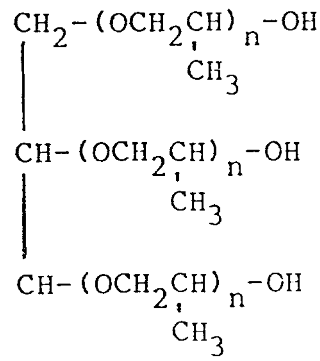

and having a number-average molecular weight of 600-3,000 and a short-chain diol having a molecular weight of 120 or less, and

(C) a foaming agent selected from water and halogenated hydrocarbons,

and which has an urea bond concentration of $5 \times 10^{-4}$ mole/g or less and a bulk density of 0.4-1 g/cm$^3$.

**2.** An elastomer according to Claim 1, wherein the polytetramethylene ether glycol has a number-average molecular weight of 500-4,000.

**3.** An elastomer according to Claim 1, wherein the polytetramethylene ether glycol has a number-average molecular weight of 1,000-2,000.

**4.** An elastomer according to Claim 1, wherein the prepolymer has a NCO content of 5-15 % by weight.

**5.** An elastomer according to Claim 1, wherein the short-chain diol is ethylene glycol or 1,4-butanediol.

**6.** An elastomer according to Claim 1, wherein the equivalent ratio of the polyoxypropylenetriol/the short-chain diol is 1/30 to 2/1.

**7.** An elastomer according to Claim 6 wherein the equivalent ratio of the polyoxypropylenetriol/the short-chain diol is 1/20 to 1/2.

**8.** An elastomer according to Claim 1, which has a bulk density of 0.5-0.9 g/cm$^3$.

**9.** An elastomer according to Claim 1, which has a tensile strength of 40-100 kg/cm$^2$.

**10.** An elastomer according to Claim 1, which has a tear strength of 30-60 kg/cm$^2$.

**11.** An elastomer according to Claim 1, which has a compression set (50 % compression, 70 °C and 22 hours) of 0-10 %.

**12.** An elastomer according to Claim 1, which has a compression fatigue (50 x 50 x 10 mm, 0.9±0.6 ton, 10 Hz and 1,000,000 times) of 0-10 %.

**13.** An elastomer according to Claim 1, which has a dynamic spring constant (100 x 100 x 10 mm, 1.2±0.9 ton and 10 Hz) of 10-30 t/cm.

**14.** A vibration-damping material comprising the low-foaming polyurethane elastomer of Claim 1.

**15.** A grooveless flat low spring pad comprising the low-foaming polyurethane elastomer of Claim 1.

**16.** A pad for bridge tie, comprising the low-foaming polyurethane elastomer of Claim 1.

**17.** A vibration-damping material for railroad slab, comprising the low-damping polyurethane elastomer of Claim 1.

## Patentansprüche

**1.** Schwach-schäumendes Polyurethanelastomeres, welches hergestellt worden ist aus
(A) einem Prepolymeren, erhalten durch die Reaktion zwischen Polytetramethylenetherglykol und Diphenylmethandiisocyanat, mit einem NCO-Gehalt von 3 bis 22 Gew.-%,
(B) einem Polyoxypropylentriol der folgenden Struktur,

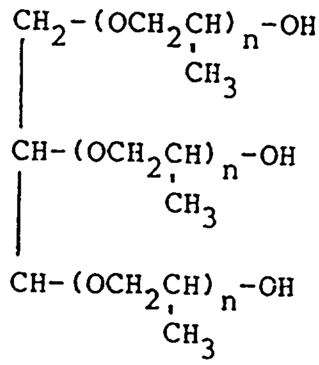

das ein zahlendurchschnittliches Molekulargewicht von 600 bis 3.000 aufweist, und einem kurzkettigen Diol mit einem Molekulargewicht von 120 oder weniger und
(C) einem Schäummittel, ausgewählt aus Wasser und halogenierten Kohlenwasserstoffen, und welches weiterhin eine Konzentration an Harnstoffbindungen von 5 x $10^{-4}$ mol/g oder weniger und eine Rohdichte von 0,4 bis 1 g/$cm^3$ aufweist.

**2.** Elastomer nach Anspruch 1, dadurch **gekennzeichnet,** daß das Polytetramethylenetherglykol ein zahlendurchschnittliches Molekulargewicht von 500 bis 4.000 aufweist.

**3.** Elastomer nach Anspruch 1, dadurch **gekennzeichnet,** daß das Polytetramethylenetherglykol ein zahlendurchschnittliches Molekulargewicht von 1.000 bis 2.000 aufweist.

**4.** Elastomer nach Anspruch 1, dadurch **gekennzeichnet,** daß das Prepolymere einen NCO-Gehalt von 5 bis 15 Gew.-% aufweist.

**5.** Elastomer nach Anspruch 1, dadurch **gekennzeichnet,** daß das kurzkettige Diol Ethylenglykol oder 1,4-Butandiol ist.

**6.** Elastomer nach Anspruch 1, dadurch **gekennzeichnet,** daß das Äquivalentverhältnis Polyoxypropylentriol/kurzkettiges Diol 1/30 bis 2/1 beträgt.

**7.** Elastomer nach Anspruch 6, dadurch **gekennzeichnet,** daß das Äquivalentverhältnis Polyoxypropylentriol/kurzkettiges Diol 1/20 bis 1/2 beträgt.

**8.** Elastomer nach Anspruch 1, dadurch **gekennzeichnet,** daß es eine Rohdichte von 0,5 bis 0,9 g/$cm^3$ aufweist.

**9.** Elastomer nach Anspruch 1, dadurch **gekennzeichnet,** daß es eine Zugfestigkeit von 40 bis 100 kg/$cm^2$ aufweist.

**10.** Elastomer nach Anspruch 1, dadurch **gekennzeichnet,** daß es eine Reißfestigkeit von 30 bis 60 kg/$cm^2$ aufweist.

**11.** Elastomer nach Anspruch 1, dadurch **gekennzeichnet,** daß es einen Druckverformungsrest (50 % Kompression, 70 °C und 22 Stunden) von 0 bis 10 % aufweist.

**12.** Elastomer nach Anspruch 1, dadurch **gekennzeichnet,** daß es eine Kompressionsermüdung (50 x 50 x 10 mm, 0,9 ± 0,6 t, 10 Hz und 1.000.000 Wiederholungen) von 0 bis 10 % aufweist.

13. Elastomer nach Anspruch 1, dadurch **gekennzeichnet,** daß es eine dynamische Federkonstante (100 x 100 x 10 mm, 1,2 ± 0,9 t und 10 Hz) von 10 bis 30 t/cm aufweist.

14. Vibrationsdämpfungsmaterial, umfassend das schwachschäumende Polyurethanelastomere nach Anspruch 1.

15. Rillenlose flache Einlage bzw. Unterlage mit geringer Federwirkung, umfassend das schwach-schäumende Polyurethanelastomere nach Anspruch 1.

16. Einlage bzw. Unterlage für Brückenschwellen bzw. Brückenbauelemente, umfassend das schwach-schäumende Polyurethanelastomere nach Anspruch 1.

17. Vibrationsdämpfendes Material für Eisenbahnschwellen, umfassend das niedrig-dämpfende Polyurethanelastomere nach Anspruch 1.

## Revendications

1. Elastomère à base de polyuréthanne à faible moussage qui est formé
   (A) d'un pré-polymère obtenu par réaction entre un polytétraméthylène-éther-glycol et le diisocyanate de diphénylméthane, ayant une teneur en NCO comprise entre 3 et 22% en poids,
   (B) d'un polyoxypropylènetriol ayant une structure représentée par

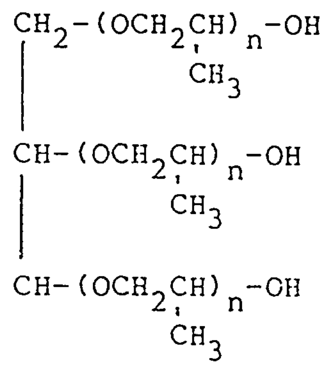

   et ayant un poids moléculaire moyen en nombre compris entre 600 et 3 000 et un diol à courte chaîne ayant un poids moléculaire de 120 ou moins, et
   (C) d'un agent moussant sélectionné parmi l'eau et des hydrocarbures halogénés,
   et qui a une concentration en liaisons urée de 5 x $10^{-4}$ mole/g ou moins et une masse volumique comprise entre 0,4 et 1 g/$cm^3$.

2. Elastomère selon la revendication 1, dans lequel l'éther de glycol et de polytétraméthylène a un poids moléculaire moyen en nombre compris entre 500 et 4 000.

3. Elastomère selon la revendication 1, dans lequel l'éther de glycol et de polytétraméthylène a un poids moléculaire moyen en nombre compris entre 1 000 et 2 000.

4. Elastomère selon la revendication 1, dans lequel le pré-polymère a une teneur en NCO comprise entre 5 et 15% en poids.

5. Elastomère selon la revendication 1, dans lequel le diol à courte chaîne est l'éthylène glycol ou bien

6. Elastomère selon la revendication 1, dans lequel le rapport en équivalents du polyoxypropylènetriol/diol à courte chaîne va de 1/30 à 2/1.

7. Elastomère selon la revendication 6 dans lequel le rapport en équivalents du polyoxypropylènetriol/diol à courte chaîne va de 1/20 à 1/2.

**8.** Elastomère selon la revendication 1, qui a une masse volumique comprise entre 0,5 et 0,9 $g/cm^3$.

**9.** Elastomère selon la revendication 1, qui a une résistance à la traction comprise entre 40 et 100 $kg/cm^2$.

**10.** Elastomère selon la revendication 1, qui a une résistance à la rupture comprise entre 30 et 60 $kg/cm^2$.

**11.** Elastomère selon la revendication 1, qui a une déformation permanente ("compression set") (50% de compression, 70 ° C et 22 heures) comprise entre 0 et 10%.

**12.** Elastomère selon la revendication 1, qui a une fatigue en compression ("compression fatigue") (50 x 50 x 10 mm, 0,9 ± 0,6 tonnes, 10 Hz et 1 000 000 de fois) comprise entre 0 et 10%.

**13.** Elastomère selon la revendication 1, qui a une constance d'élasticité dynamique ("dynamic spring constant") (100 x 100 x 10 mm, 1,2 ± 0,9 tonnes et 10 Hz) comprise entre 10 et 30 t/cm.

**14.** Matériau amortisseur de vibrations comprenant l'élastomère à base de polyuréthanne à faible moussage selon la revendication 1.

**15.** Serre-flan à faible élasticité, sans cannelures, comprenant l'élastomère à base de polyuréthanne à faible moussage selon la revendication 1.

**16.** Serre-flan pour joint de pont, comprenant l'élastomère à base de polyuréthanne à faible moussage selon la revendication 1.

**17.** Matériau amortisseur de vibrations pour dalle ou traverse ("slab") de voie ferrée, comprenant l'élastomère à base de polyuréthanne à faible moussage selon la revendication 1.